# EUROPEAN PATENT APPLICATION

(11) **EP 1 769 969 A2**
(43) Date of publication of application: **04.04.2007**
(21) Application number: 06121269.2
(22) Date of filing: 26.09.2006
(51) Int. Cl.: B60Q 9/00

(54) **Apparatus and method for controlling notification, recording media, and program**

(30) Priority: 28.09.2005 JP 2005281227
(71) Applicant: OMRON CORPORATION, Kyoto-shi, Kyoto 600-8530 (JP)
(72) Inventor: Morimoto, Masaru c/o OMRON Corporation, Shimogyo-ku, Kyoto-shi Kyoto 600-8530 (JP)
(74) Representative: Weihs, Bruno Konrad

(57) **Abstract**

An object of the present invention is to urge a user to check a target to be checked by the user. A check condition detecting section 104 detects whether or not a user has checked a to-be-checked target to be checked by the user which is identified by a to-be-checked target identifying section 101, on the basis of the direction of the user's face detected by a face direction detecting section 102 or the direction of the user's line of sight detected by a line-of-sight direction detecting section 103. A notification control section 105 controls a notifying section so that if the user has not checked the to-be-checked target, it notifies the user of a situation requiring the user to check the to-be-checked target and so that if the user has checked the to-be-checked target, it limits the notification of the situation requiring the user to check the to-be-checked target. The present invention can be applied to the monitoring apparatus for monitoring the car speed.

## Description

### BACKGROUND OF THE INVENTION

### Field of the Invention

The present invention relates to an apparatus and method for controlling notification, recording media, and a program, and in particular, to an apparatus and method for controlling notification, recording media, and a program which enables a user to be appropriately urged to check a target to be checked by the user.

### Description of the Related Art

A technique has been proposed which detects the radius of a turn in a road located ahead of a vehicle to give an alarm depending on the speed of the car as is approaching the turn (see, for example, Japanese Patent Laid-Open No. 8-194889).

A technique has also been proposed which calculates the optimal distribution of a driver's attention taking the surroundings, position, and speed of the vehicle into account, compares the optimal distribution with the actual one detected on the basis of movement of the driver's line of sight or face, and if the attention is insufficient, notifies the driver of the need to optimize the distribution of the attention (see, for example, Japanese Patent Laid-Open No. 2004-178367).

However, the invention described in Japanese Patent Laid-Open No. 8-194889 unconditionally gives a continuous alarm depending on the vehicle speed even if the driver has checked the speed meter to recognize the car speed. This may bother the driver.

For the invention described in Japanese Patent Laid-Open No. 2004-178367, the optimal calculation of distribution of the driver's attention is difficult because of various factors varying during driving of the car and the difference in the appropriate distribution of the attention among individuals. Further, it is not always possible to appropriately call the driver's attention; the driver's attention may be unnecessarily called or may not be called in case of necessity. Moreover, a predetermined time is always required to detect the distribution of the attention. This technique is thus unsuitable for applications that need to notify the driver of emergency.

The present invention has been made in view of these circumstances. An object of the present invention is to appropriately urge a user to check a target to be checked by the user.

### SUMMARY OF THE INVENTION

A notification control apparatus in accordance with an aspect of the present invention comprises identifying means for identifying a to-be-checked target to be checked by a user, direction detecting means for detecting a direction of the user's face or line of sight, a check detecting means for detecting whether or not the user has checked the to-be-checked target, on the basis of the detected direction of the face or line of sight, and notification control means for controlling a notification to the user so that the user is notified of a situation requiring the user to check the to-be-checked target if the check detecting means does not detect that the user has checked the to-be-checked target and so that the notification of the situation requiring the user to check the to-be-checked target is limited if the check detecting means detects that the user has checked the to-be-checked target.

In the notification control apparatus in accordance with the aspect of the present invention, the identifying means identifies the to-be-checked target to be checked by the user, and the direction detecting means detects the direction of the user's face or line of sight. The check detecting means detects whether or not the user has checked the to-be-checked target, on the basis of the detected direction of the face or line of sight. The notification control means controls the notification to the user so that the user is notified of the need to check the to-be-checked target if the check detecting means does not detect that the user has checked the to-be-checked target and so that the notification of the situation requiring the user to check the to-be-checked target is limited if the check detecting means detects that the user has checked the to-be-checked target.

This makes it possible to detect whether or not the user has checked the target to be checked by the user. This aspect also enables the user to be appropriately urged to check the target to be checked by the user.

The direction detecting means, check detecting means, and notification control means are composed of, for example, a CPU. The direction detecting means can be composed of, for example, a dedicated device that detects the direction of the face or line of sight.

A notification is given to the user through a massage display, an audio output, an alarm sound, or illumination or blinking of a LED or lamp.

The check detecting means can detect whether or not the user has checked the to-be-checked target, on the basis of the time for which or the number of times that the user looks toward the to-be-checked target.

The notification control means can limit the notification to the user by suspending, stopping, or delaying the notification, reducing the frequency of the notification, or changing a method or content of the notification.

If the speed of the car driven by the user exceeds an appropriate value, the identifying means can identify the to-be-checked target that is a speed meter of the car, the check detecting means can detect whether or not the user has checked the speed meter, and the notification control means can control the notification to the user so that the user is notified that the speed of the car exceeds the appropriate value if the check detecting means does not detect that the user has checked the speed meter and so that the notification of an excess of the car speed over the appropriate value is limited if the check detecting means detects that the user has checked the speed meter.

A method of controlling notification or a program according to an aspect of the present invention comprises an identifying step of identifying a to-be-checked target to be checked by a user, a direction detecting step of detecting a direction of the user's face or line of sight, a check detecting step of detecting whether or not the user has checked the to-be-checked target, on the basis of the detected direction of the face or line of sight, and a notification control step of controlling a notification to the user so that the user is notified of a situation requiring the user to check the to-be-checked target if the check detecting step does not detect that the user has checked the to-be-checked target and so that the notification of the situation requiring the user to check the to-be-checked target is limited if the check detecting step detects that the user has checked the to-be-checked target.

In the method of controlling notification or the program according to this aspect of the present invention, the identifying step identifies a to-be-checked target to be checked by a user, and the direction detecting means detects the direction of the user's face or line of sight. The check detecting means detects whether or not the user has checked the to-be-checked target, on the basis of the detected direction of the face or line of sight. The notification control step controls the notification to the user so that the user is notified of the situation requiring the user to check the to-be-checked target if the check detecting step does not detect that the user has checked the to-be-checked target and so that the notification of the situation requiring the user to check the to-be-checked target is limited if the check detecting step detects that the user has checked the to-be-checked target.

This makes it possible to detect whether or not the user has checked the target to be checked by the user. This aspect also enables the user to be appropriately urged to check the target to be checked by the user.

For example, the identifying step is executed by a CPU by identifying the to-be-checked target to be checked by the user. For example, the direction detecting step is executed by the CPU by detecting the direction of the user's face or line of sight. For example, the notification control step is executed by the CPU by controlling the notification to the user so that the user is notified of the situation requiring the user to check the to-be-checked target if the check detecting step does not detect that the user has checked the to-be-checked target and so that the notification of the situation requiring the user to check the to-be-checked target is limited if the check detecting step detects that the user has checked the to-be-checked target.

As described above, an aspect of the present invention makes it possible to detect whether or not the user has checked the target to be checked by the user. An aspect of the present invention also enables the user to be appropriately urged to check the target to be checked by the user.

### BRIEF DESCRIPTION OF THE DRAWINGS

FIG. 1 is a block diagram showing an embodiment of a monitoring apparatus to which the present invention has been applied;
FIG. 2 is a diagram showing an example of a to-be-checked target;
FIG. 3 is a block diagram showing an example of configuration of functions provided by a control section shown in FIG. 1;
FIG. 4 is a flowchart illustrating a monitoring process executed by the monitoring apparatus in FIG. 1;
FIG. 5 is a diagram showing an example of installation of a camera shown in FIG. 1;
FIG. 6 is a block diagram showing an example of configuration of functions provided by the control section in FIG. 1;
FIG. 7 is a flowchart illustrating another example of a monitoring process executed by the monitoring apparatus in FIG. 1;
FIG. 8 is a diagram illustrating a method of detecting the direction of a face;
FIG. 9 is a diagram illustrating a method of detecting the direction of the face; and
FIG. 10 is a block diagram showing an example of configuration of a personal computer.

### [Description of symbols]

- 1: Monitoring apparatus
- 11: Camera
- 12: Image input section
- 14: Sensor section
- 15: Information input section
- 16: Control section
- 17: Notifying section
- 101: To-be-checked target identifying section (identifying section)
- 102: Face direction detecting section (direction detecting means)
- 103: Line-of-sight direction detecting section (direction detecting means)
- 104: Check condition detecting section (check detecting means)
- 105: Notification control section (notification control means)
- 201: Appropriate-speed setting section
- 202: Car speed monitoring section
- 901: CPU
- 902: ROM
- 903: RAM
- 908: Recording section
- 910: Drive
- 911: Removable media

### DETAILED DESCRIPTION OF THE PREFERRED EMBODIMENTS

An embodiment of the present invention will be described below with reference to the drawings.

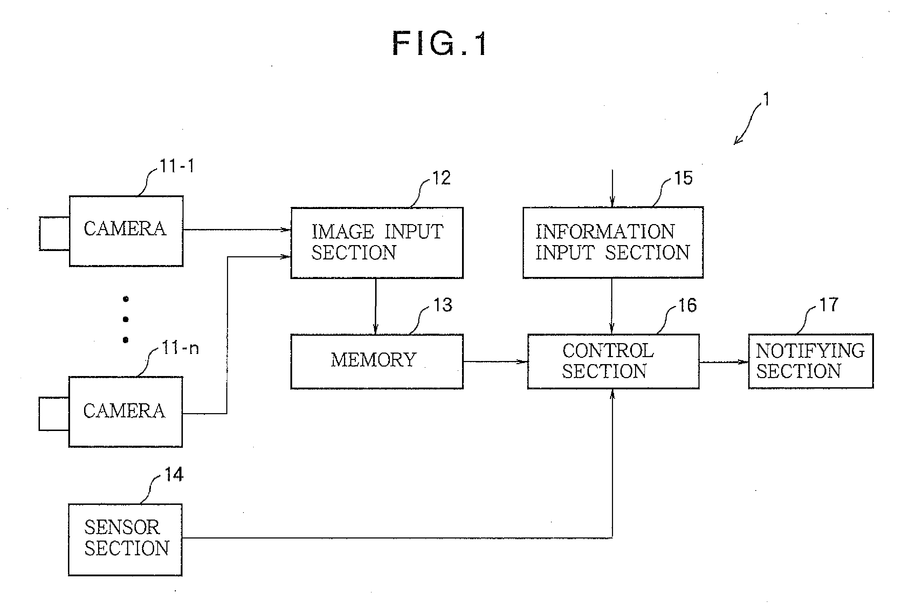

FIG. 1 is a block diagram showing an embodiment of a monitoring apparatus to which the present invention has been applied. The monitoring apparatus 1 includes cameras 11-1 to 11-n, an image input section 12, a memory 13, a sensor section 14, an information input section 15, a control section 16, and a notifying section 17.

Each of the cameras 11-1 to 11-n is composed of, for example, a CCD (Charge Coupled Device) image taking element, a CMOS (Complementary Metal Oxide Semiconductor) image taking element, or a logarithmic conversion type image taking element (for example, HDRC (High Dynamic Range CMOS (Complementary Metal Oxide Semiconductor)) (registered trade mark)). The camera 11-1 to 11-n each output picked-up image data to the image input section 12. At least one of the cameras 11-1 to 11-n is installed so as to take an image of a user's face to detect the direction of the user' s face or line of sight. The cameras 11-1 to 11-n are also installed at positions where they can take images of places the images of which need to be taken in order to allow the user to avoid dangers or troubles or acquire required information.

The cameras 11-1 to 11-n will hereinafter be simply referred to as a camera 11 if they need not be distinguished from one another.

The image input section 12 stores image data output by the camera 11, in the memory 13.

The sensor section 14 is composed of various sensors and provided as required. The various sensors constituting the sensor section 14 supply sensor data indicative of detection results, to the control section 16.

For example, if the monitoring apparatus 1 is provided in a car, the sensor section 14 is provided with an illuminance sensor that detects brightness, a temperature sensor that detects temperature, a humidity sensor that detects humidity, a wind speed sensor that detects wind speed, an atmospheric pressure sensor that detects atmospheric pressure, a rainfall sensor that detects rainfall, a sensor that detects the weather or environment around the car, an acceleration sensor that detects the inclination or vibration of the car, a speed sensor that detects the speed of the car, an obj ect sensor that detects the presence or state of an object around the car, a distance sensor that detects the distance between the car and a surrounding object, or a sensor that detects the presence, state or position of the car or the presence, state, or position of an object around the car.

The information input section 15 acquires, from an external source, information other than that which can be obtained from images taken by the camera 11 and from sensor data acquired by the sensor section 14. The information acquired (hereinafter referred to as external information) is supplied to the control section 16.

For example, if the monitoring apparatus 1 is provided in the car, the following information is input to the information input section 15: the speed of the car, the number of rotations of the engine, a shift position, the amount of remaining fuel, defects in various parts, information on the status of the car output by a control apparatus of the car, the occurrence of an accident, a car stopped by a failure, or a fire, traffic or lane regulations, congestion information, traffic information such as emergency notification which is acquired utilizing a VICS (Vehicle Information and Communication System) or the like, or map information acquired utilizing a navigation system or the like.

The control section 16 acquires image data stored in the memory 13. The control section 16 identifies a to-be-checked target to be checked by the user on the basis of image data, sensor data, or external information to avoid emergencies or troubles or to acquire required information.

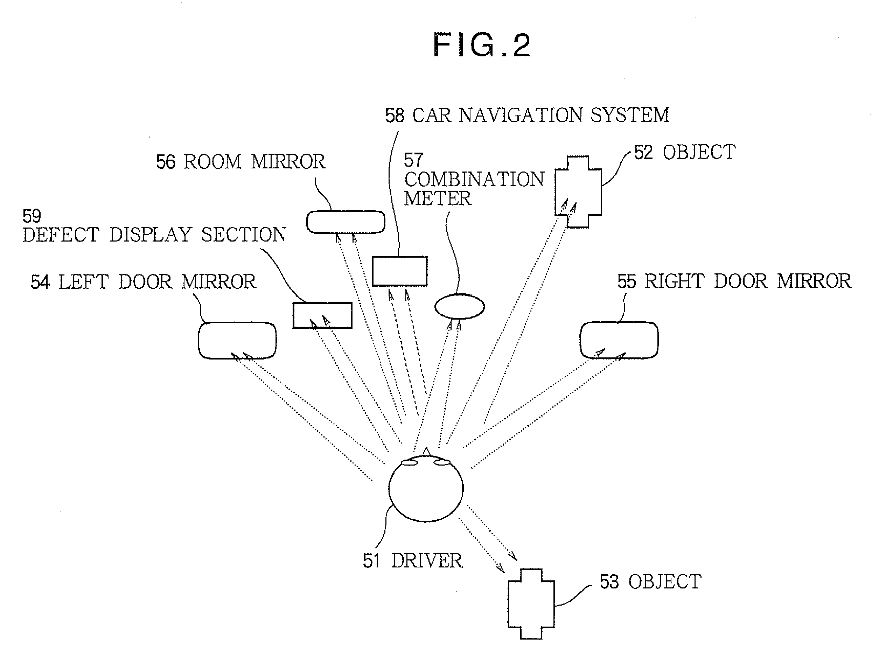

FIG. 2 is a diagram showing an example of a to-be-checked target identified if a driver 51 is driving a car provided with the monitoring apparatus 1. The left in the figure corresponds to the direction in which the car advances (frontward).

For example, if the apparatus detects an object 52 (for example, a person or an obstacle) in the car advancing direction on the basis of image or sensor data, it identifies the object 52 as a to-be-checked target. For example, if the apparatus detects that the car is being rapidly approached by another car from behind on the basis of image or sensor data, it identifies a left door mirror 54, a right door mirror 55, or a room mirror 56 as a to-be-checked target because of the need to check the rear of the car.

If the apparatus detects that the car has been put in reverse gear, on the basis of external information input by the control apparatus of the car, the room mirror 56, a rear window (not shown in the drawings), it identifies a rear monitor device, or the like as a to-be-checked target because of the need to check the rear of the car for making the car back up safely. In this case, when the apparatus detects an object 53 behind the car on the basis of image or sensor data, it identifies the obj ect 53 as a to-be-checked target. Moreover, for example, if the car is in reverse gear when started, the apparatus identifies a combination meter 57 that display the shift position, as a to-be-checked target in order to prevent the car from backing up against the driver's will.

If the apparatus detects that the car is shifting to the right or left lane, on the basis of external information, it identifies, as a to-be-checked target, the left door mirror 54 or right door mirror 55, which needs to be checked in order to safely change the lane. For example, if the apparatus detects that the speed of the car has fallen within a dangerous range, on the basis of external information, it identifies the combination meter 57 including the speed meter, as a to-be-checked target. For example, if the apparatus detects that the amount of fuel remaining in the car is at most a predetermined value, on the basis of external information, it identifies the combination meter 57 including a fuel gauge, as a to-be-checked target. For example, if the apparatus detects a defect in the vehicle such as a failure or its sign, on the basis of external information, it identifies, as a to-be-checked target, a defect display section 59 that notifies the user of a defect in the car.

If the apparatus utilizes the VICS or the like to acquire information such as the occurrence of an accident, a car stopped by a failure, or a fire, traffic or lane regulations, congestion information, or emergencynotification, it identifies a device (car navigation system 58) that displays the information acquired, as a to-be-checked target.

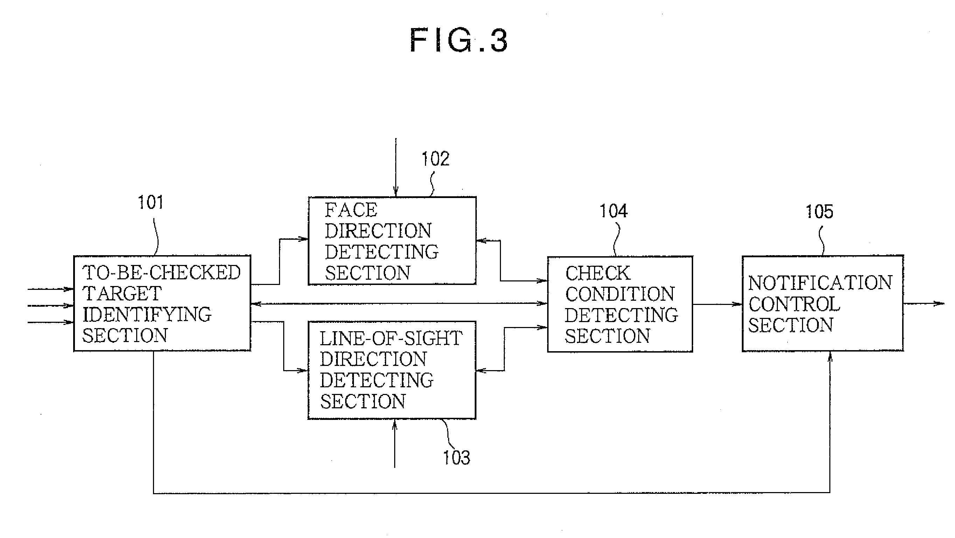

As described below with reference to FIG. 3, the control section 16 controls the notifying section 17, composed of an audio output device such as a speaker or an alarm, a display device such as an LCD (Liquid Crystal Display), or an emitting device such as a LED (Light Emitting Diodes) or lamp. The control section 16 thus notifies the user of a situation requiring the user to check the to-be-checked target to urge the user to check the to-be-checked target. For example, if the monitoring apparatus 1 is provided in the car, the control section 16 may control a power steering so that a steering wheel becomes heavier or output, to the control apparatus of the car, information indicative of an instruction to activate the brakes for only a short time. The control section 16 may thus control the movement of the car main body to notify the driver of the situation requiring the user to check the to-be-checked target.

The control section 16 further detects, on the basis of image data taken by the camera 11, the direction of the user's face or line of sight and thus whether or not the user has checked the to-be-checked target. If the control section 16 detects that the user has checked the to-be-checked target, it limits the notification, by the notifying section 17, of the situation requiring the user to check the to-be-checked target.

FIG. 3 is a block diagram showing an example of configuration of functions provided by the control section 16 by executing a predetermined program. The control section 16 executes the program to provide the functions including a to-be-checked target identifying section 101, a face direction detecting section 102, a line-of-sight direction detecting section 103, a check condition detecting section 104, and a communication control section 105.

The to-be-checked target identifying section 101 acquires image data taken by the camera 11, from the memory 13. The to-be-checked target identifying section 101 acquires various sensor data output by the sensor section 14. The to-be-checked target identifying section 101 further acquires externally input various external information via the information input section 15. The to-be-checked target identifying section 101 identifies the to-be-checked target to be checked by the user, on the basis of image data, sensor data, or external information. The to-be-checked target identifying section 101 supplies information on the to-be-checked target such as its portion or type to the face direction detecting section 102, line-of-sight direction detecting section 103, check condition detecting section 104, and notification control section 105.

If the to-be-checked target identifying section 101 detects that the check of the identified to-be-checked target need no longer be checked, on the basis of image data, sensor data, or external information, it supplies information indicating that the check of the to-be-checked target need no longer be checked, to the face direction detecting section 102, line-of-sight direction detecting section 103, check condition detecting section 104, and notification control section 105.

The face direction detecting section 102 acquires, from the memory 13, image data on the user's face included in the image data taken by the camera 11. The face direction detecting section 102 detects the direction of the user's face on the basis of the image data acquired. The technique by which the face direction detecting section 102 detects the direction of the face is not limited to a particular one. Any technique is desirable which is able to detect the direction of the face both more quickly and accurately. The face direction detecting section 102 supplies information indicative of the direction of the user's face to the check condition detecting section 104.

The line-of-sight direction detecting section 103 acquires, from the memory 13, image data on the user's face included in the image data taken by the camera 11. The line-of-sight direction detecting section 103 detects the direction of the user's line-of-sight on the basis of the image data acquired. The technique by which the line-of-sight direction detecting section 103 detects the direction of the line of sight is not limited to a particular one. Any technique is desirable which is able to detect the direction of the line of sight both more quickly and accurately. The line-of-sight direction detecting section 103 supplies information indicative of the direction of the user's line-of sight to the check condition detecting section 104.

Any one of the face direction detecting section 102 and the line-of-sight direction detecting section 103 may be provided in the monitoring apparatus 1. Whether or not the user has checked the to-be-checked target can be more accurately detected by providing the line-of-sight direction detecting section 103 to detect the direction of the user's line of sight.

If a target likely to be identified as a to-be-checked target is known and the direction of the user's face or line of sight is almost fixed when the user gazes each target, information may be pre-registered which is indicative of the characteristics of image data obtained when the user looks directly to the camera 11 and each target and of image data obtained when the user gazes the target (for example, the position or shape of the user's face or each of its components). On the basis of the information, whether or not the user has checked the to-be-checked target may be detected. This makes it possible to more accurately detect whether or not the user has checked the to-be-checked target, regardless of whether the direction of the face or the line of sight is used.

When the direction of the user's face or line of sight is detected on the image data on his or her face, the direction of the face or line of sight observedwhen the user looks directly toward the a camera lens is detected most accurately. Accordingly, if a target likely to be identified as a to-be-checked target is known and the direction of the user's face or line of sight is almost fixed when the user gazes each target, then when the user gazes the target, the camera 11 may be installed so that the user's line of sight is located closer to the lens of the camera 11 (in a condition similar to that in which the user gazes the lens of the camera 11). This makes it possible to more accurately detect that the user directs his or her face or line of sight to the target. Whether or not the user has checked the to-be-checked target can thus be detected more accurately.

In the example described above with reference to FIG. 2, the left door mirror 54, right door mirror 55, room mirror 56, combination meter 57, car navigation system 58, and defect detecting section 59 are each known to be possibly identified as a to-be-checked target. The driver gazes each target in almost the same condition during driving. Consequently, the direction of the face or line of sight is almost fixed when the driver gazes the target. Thus, if the driver in a driver seat gazes the left door mirror 54, right door mirror 55, room mirror 56, combination meter 57, car navigation system 58, or defect detecting section 59, the camera 11 is installed so that the user's line of sight is located closer to the lens of the camera 11. This makes it possible to more accurately detect whether or not the user has checked the left door mirror 54, right door mirror 55, room mirror 56, combination meter 57, car navigation system 58, or defect detecting section 59, which is a to-be-checked target.

The check condition detecting section 104 detects whether or not the user has checked the to-be-checked target identified by the to-be-checked target identifying section 101, on the basis of information indicative of the direction of the user's face or line of sight. The check condition detecting section 104 supplies information indicative of detection results to the to-be-checked target identifying section 101, face direction detecting section 102, line-of-sight direction detecting section 103, or notification control section 105.

The notification control section 105 controls the notifying section 17 to notify the user of a situation requiring the user to check the to-be-checked target, thus urging the user to check the to-be-checked target. I f the check condition detecting section 104 detects that the user has checked the to-be-checked target, the notification control section 105 limits the notification, by the notifying section 17, of the situation requiring the user to check the to-be-checked target.

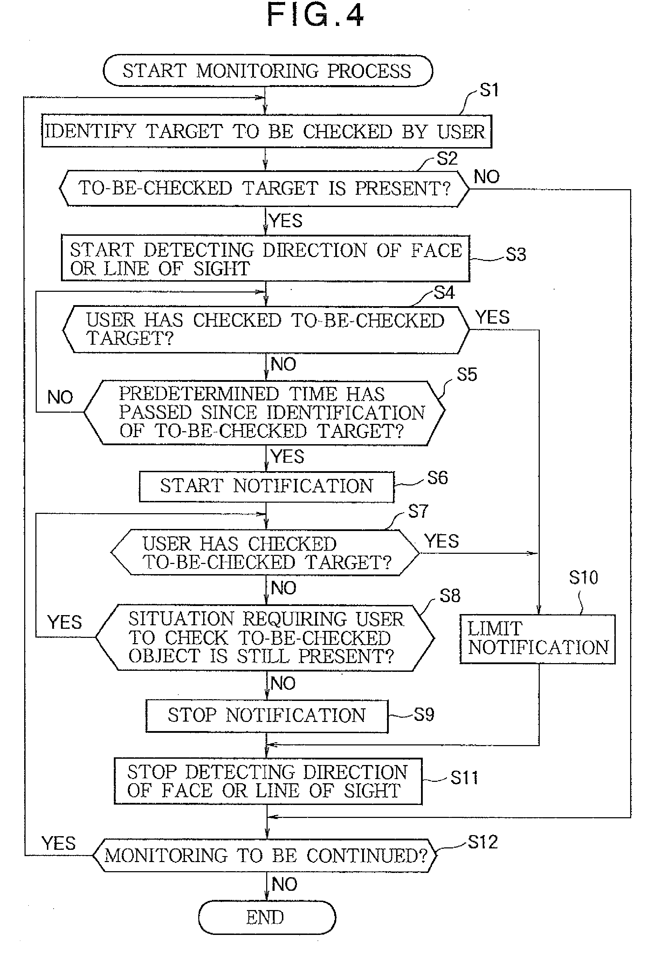

Now, with reference to the flowchart shown in FIG. 4, description will be given of a monitoring process executed by the monitoring apparatus 1 . This process is started when the user inputs an instruction to start a monitoring process, to the control section 16 via an input section (not shown in the drawings) of the monitoring apparatus 1.

In step S1, the to-be-checked target identifying section 101 identifies a to-be-checked target to be checked by the user. Specifically, the to-be-checked target identifying section 101 identifies the target to be checked by the user, that is, the to-be-checked target, on the basis of image data acquired from the memory 13, sensor data supplied by the sensor section 14, or external information externally input via the information input section 15.

In step S2, the to-be-checked target identifying section 101 determines whether or not the to-be-checked target is present, on the basis of the process result in step S1. If the to-be-checked target identifying section 101 determines that the to-be-checked target is present, the process proceeds to step S3.

In step S3, the face direction detecting section 102 or line-of-sight direction detecting section 103 starts detecting the direction of the face or line of sight. Specifically, the to-be-checked target identifying section 101 supplies information identifying the position or type of the identified to-be-checked target, to the face direction detecting section 102, line-of-sight direction detecting section 103, check condition detecting section 104, and notification control section 105.

If the face direction detecting section 102 is provided in the monitoring apparatus 1, it starts detecting the direction of the user's face on the basis of image data on the user's face stored in the memory 13. The face direction detecting section 102 starts supplying information indicative of the direction of the user's face, to the check condition detecting section 104.

If the line-of-sight direction detecting section 103 is provided in the monitoring apparatus 1, it starts detecting the direction of the user's line of sight on the basis of image data on the user's face stored in the memory 13. The line-of-sight direction detecting section 103 starts supplying information indicative of the direction of the user's line of sight, to the check condition detecting section 104.

In step S4, the check condition detecting section 104 determines whether or not the user has checked the to-be-checked target. Specifically, the check condition detecting section 104 detects whether or not the user has viewed the to-be-checked target for at least a predetermined time, on the basis of the direction of the user's face detected by the face direction detecting section 102 or the direction of the user's line of sight detected by the line-of-sight direction detecting section 103. If the check condition detecting section 104 does not detect that the user has viewed the to-be-checked target for at least the predetermined time, then it determines that the user has not checked the to-be-checked target. The process then proceeds to step S5.

The check condition detecting section 104 sets a check time (time required for the user to view the to-be-checked target) used to determine whether or not the to-be-checked target has been checked, at an appropriate value according to the position or type of the to-be-checked target. Alternatively, the check time may be varied depending on, for example, weather or the brightness of the surroundings. Alternatively, the check time may be varied depending on the condition in which the user views the to-be-checked target (for example, the user may view the to-be-checked target with his or her face or line of sight moved or fixed or with the to-be-checked target located almost at the center of the line of sight or off the center of the line of sight).

In step S5, the check condition detecting section 104 determines whether or not a predetermined time has passed since the identification of the to-be-checked target. If the check condition detecting section 104 determines that the predetermined time has not passed since the identification of the to-be-checked target, the process returns to step S4. Steps S4 and S5 are then repeated until the check condition detecting section 104 determines in step S4 that the user has checked the to-be-checked target or the check condition detecting section 104 determines in step S5 that the predetermined time has passed since the identification of the to-be-checked target.

In step S5, if the check condition detecting section 104 determines that the predetermined time has passed since the identification of the to-be-checked target, that is, if the predetermined time has passed before the user checks the to-be-checked target, then the process proceeds to step S6.

The check condition detecting section 104 sets the time between the identification of the to-be-checked target and the start of a notification in step S6, described later, at an appropriate time depending on the urgency of the check or the position or type of the to-be-checked target.

In step S6, the notifying section 17 starts a notification. Specifically, the check condition detecting section 104 supplies information indicating that the user has not checked the to-be-checked target, to the notification control section 105. The notifying section 17 starts notifying the user of a situation requiring the user to check the to-be-checked target, under the control of the notification control section 105.

If the monitoring apparatus 1 is provided in the car, the notifying section 17 displays or auditorily outputs a message indicating that a situation requiring the user to check the to-be-checked target has occurred, for example, "An obstacle has been found ahead", "The speed limit has been exceeded by •• km/h", or "An accident is occurring •• m ahead". The notifying section 17 also displays or auditorily outputs a message indicating the need to check the to-be-checked target, for example, "Check the front of the car" or "Acquire accident information through the car navigation system". Instead of displaying or auditorily outputting the messages, the notifying section 17 may, for example, output an alarm sound or illuminate or blink a LED, a lamp, or the like to notify the user of the situation requiring the user to check the to-be-checked target.

In step S7, the apparatus determines whether or not the user has checked the to-be-checked target, as in the case of step S4. If the apparatus determines that the user has not checked the to-be-checked target, the process proceeds to step S8.

In step S8, the to-be-checked target identifying section 101 determines whether or not the situation requiring the user to check the to-be-checked target is still present. Specifically, the to-be-checked target identifying section 101 determines whether the identified situation requiring the user to check the to-be-checked target is still present, on the basis of image data acquired from the memory 13, sensor data supplied by the sensor section 14, and external information externally input via the information input section 15. If the to-be-checked target identifying section 101 determines that the situation requiring the user to check the to-be-checked target is still present, the process returns to step S7. Steps S7 and S8 are subsequently repeated until the apparatus determines in step S7 that the user has checked the to-be-checked target or the to-be-checked target identifying section 101 determines in step S8 that the situation requiring the user to check the to-be-checked target is over.

In step S8, if the to-be-checked target identifying section 101 determines that the situation requiring the user to check the to-be-checked target is over, that is, if the situation requiring the user to check the to-be-checked target has been cleared, the process proceeds to step S9.

In step S9, the notifying section 17 stops the notification. Specifically, the to-be-checked target identifying section 101 supplies information indicating that the to-be-checked target need no longer be checked, to the face direction detecting section 102, line-of-sight direction detecting section 103, check condition detecting section 104, and notification control section 105. The notifying section 17 stops the notification started in step S6 under the control of the notification control section 105. Subsequently, the process proceeds to step S11.

In step S4 or S7, if the check condition detecting section 104 detects that the user has viewed the to-be-checked target for at least a predetermined time, on the basis of the direction of the user's face detected by the face direction detecting section 102 or the direction of the user's line of sight detected by the line-of-sight direction detecting section 103, it determines that the user has checked the to-be-checked target. The process then proceeds to step S10.

The apparatus may be configured, as required, to determine that the user has checked the to-be-checked target upon detecting that the user has viewed the to-be-checked target for at least a predetermined number of times. In this case, the number of times used as a determination criterion is set at an appropriate value depending on the position or type of the to-be-checked target, the weather or the brightness of the surroundings, or the condition in which the user views the to-be-checked target.

In step S10, the notification control section 105 limits the notification. Specifically, the check condition detecting section 104 supplies information indicating that the user has checked the to-be-checked target, to the to-be-checked target identifying section 101, face direction detecting section 102, line-of-sight direction detecting section 103, and notification control section 105. The notification control section 105 controls the notification of a situation requiring the user to check the to-be-checked target. For example, the notification of a situation requiring the user to check the to-be-checked target is suspended, stopped, or delayed, the frequency of the notification is reduced, or the method or content of the notification is changed so as to reduce notification level (for example, notification expression is becomes softer or notification volume lowers).

The notification control section 105 stops the notification when the situation requiring the user to check the to-be-checked target is over.

In step S11, the face direction detecting section 102 or line-of-sight direction detecting section 103 stops detecting the direction of the face or line of sight.

If the apparatus determines in step S2 that no to-be-checked target is present, steps S3 to S11 are skipped and the process proceeds to step S12.

In step S12, the control section 16 determines whether or not to continue the monitoring. If the control section 16 determines that the monitoring be continued, the process returns to step S1. Steps S1 to S12 are then repeated until the control section determines in step S12 that the monitoring be ended.

In step S12, if the control section 16 determines that the monitoring be ended, for example, if an instruction to end the monitoring process is input by the user to the control section 16 via the input section (not shown in the drawings) of the monitoring apparatus 1, the monitoring process is ended.

Thus, the notification is limited by performing the required operation of checking the target to be checked (to-be-checked target). This prevents the situation in which even though the to-be-checked target has been checked, the same notification as that given before the check is continuously given or an unwanted notification is given. The user is thus prevented from being bothered by such a notification.

This also allows the user to form the habit of checking the to-be-checked target in order to limit the notification.

Notification can also be given depending on the user's ability to recognize or check the to-be-checked target, without the need to change settings.

In the process flow in the flowchart in FIG. 4, for simplification, after a to-be-checked target is identified and before a notification to the user is stopped or limited, a new to-be-checked target is not identified. However, actually, with a to-be-checked target already identified, a new to-be-checked target may be identified.

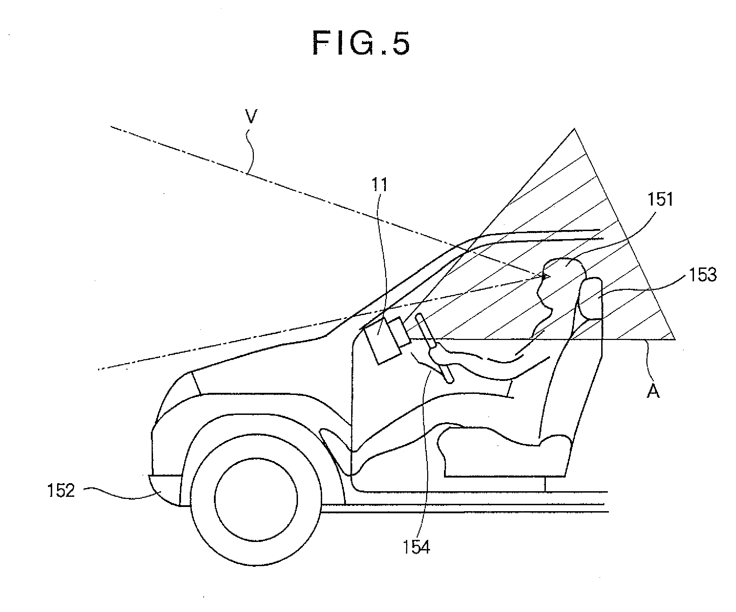

Now, with reference to FIGS. 5 to 9, description will be given of an example in which the monitoring apparatus 1 is used for an application that needs to monitor the speed of the car for an excess.

If the monitoring apparatus 1 is used for an application that needs to monitor the speed of the car for an excess, only one camera 11 shown in FIG. 15 is provided in the monitoring apparatus 1. The camera 11 is installed in the vicinity of the speed meter so that, with a driver 151 in a driver seat 153 of a car 152 holding a steering wheel 154 to drive the car, the face of the driver 151 is included in an image taking area A of the camera 11 and so that if the driver 151 gazes the speed meter (not shown in the drawings) located in front of the driver seat 153, the line of sight of the driver 151 is located closer to the lens of the camera 11. The speed meter (not shown in the drawings) is not located within the visual field V of the driver 151 during driving.

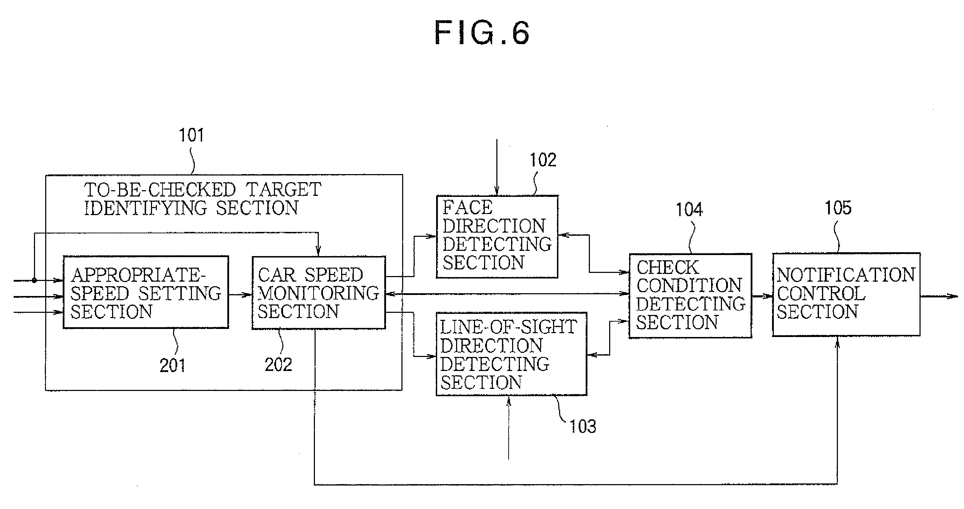

FIG. 6 is a block diagram showing an example of configuration of functions provided by the control section 16 in FIG. 3. Components in FIG. 6 corresponding to those in FIG. 3 are denoted by the same reference. The description of the same processes as described above is omitted.

The functional blocks shown in FIG. 6 include the to-be-checked target identifying section 101, face direction detecting section 102, line-of-sight detecting section 103, check condition detecting section 104, and notification control section 105, similarly to the functional blocks shown in FIG. 3. Moreover, the to-be-checked target identifying section 101 includes an appropriate-speed setting section 201 and a car speed monitoring section 202.

The appropriate-speed setting section 201 acquires image data taken by the camera 11, from the memory 13. The appropriate-speed setting section 201 also acquires various sensor data output by the sensor section 14. The appropriate-speed setting section 201 further acquires various externally input information via the information input section 15. The appropriate-speed setting section 201 sets the appropriate speed for the car on the basis of image data, sensor data, or external information.

For example, the appropriate-speed setting section 201 obtains the radius of curvature of a turn in the road on which the car is to travel, frommap data acquired via the information input section 15 from the car navigation system provided in the car. The appropriate-speed setting section 201 then sets the appropriate speed on the basis of the radius of curvature.

For example, the appropriate-speed setting section 201 sets the appropriate speed on the basis of speed regulation information or congestion information contained in road traffic information acquired from the VICS or the like via the information input section 15.

For example, the appropriate-speed setting section 201 reads a speed limit shown in image data on a speed limit sign and sets the appropriate speed on the basis of the read speed limit.

For example, the appropriate-speed setting section 201 sets the appropriate speed on the basis of the weather, temperature, and road condition determined from sensor data supplied by the sensor section 14.

The above methods of setting the appropriate speed are only illustrative and other methods may be used. A plurality of the above methods may be combined together.

The appropriate-speed setting section 201 supplies information indicating the set appropriate speed to the car speed monitoring section 202.

The car speed monitoring section 202 acquires car speed information from the control apparatus of the car via the information input section 15. The car speed monitoring section 202 monitors whether or not the current car speed is within the range of the appropriate speed. If the appropriate speed is exceeded, the car speed monitoring section 202 identifies the speedmeter of the car as a to-be-checked target. The cars speed monitoring section 202 supplies information indicating that the speed meter has been identified as a to-be-checked target, to the face direction detecting section 102, line-of-sight direction detecting section 103, and check condition detecting section 104, and notification control section 105. The car speed monitoring section 202 acquires, from the check condition detecting section 104, information containing a detection result indicating whether or not the user has checked the speed meter, the to-be-checked target. If the car speed monitoring section 202 detects that the car speed that exceeded the appropriate value has returned to within the range of the appropriate value, it supplies information indicating that the car speed has returned to within the range of the appropriate speed, to the face direction detecting section 102, line-of-sight direction detecting section 103, and check condition detecting section 104, and notification control section 105.

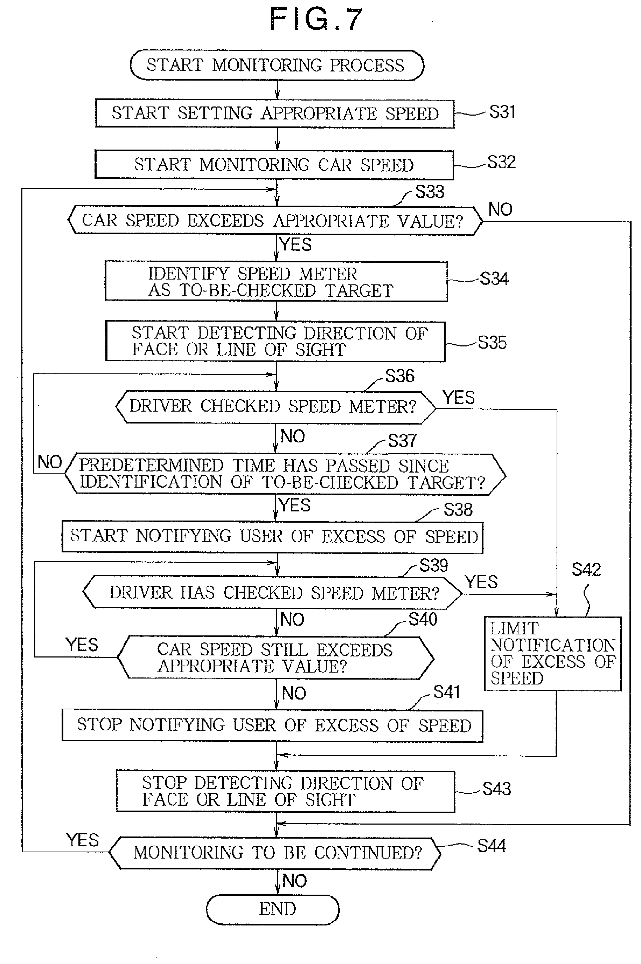

Now, with reference to the flowchart in FIG. 7, description will be given of amonitoringprocess executed if the monitoring apparatus 1 is used for an application that needs to monitor the speed of the car for excess. This process is started when the user inputs an instruction to start a monitoring process, to the control section 16 via the input section (not shown in the drawings) of the monitoring apparatus 1.

In step S31, the appropriate-speed setting section 201 starts setting an appropriate speed. Specifically, the appropriate-speed setting section 201 starts setting an appropriate speed for the car on the basis of image data acquired from the memory 13, sensor data supplied by the sensor section 14, or external information externally input via the information input section 15. The appropriate-speed setting section 201 starts supplying information indicative of the set appropriate speed to the car speed monitoring section 202.

In step S32, the car speed monitoring section 202 starts monitoring the car speed. Specifically, the car speed monitoring section 202 starts monitoring whether or not the current car speed contained in car speed information acquired via the information input section 15 is within the range of the appropriate speed set by the appropriate-speed setting section 201.

In step S33, the car speed monitoring section 202 determines whether or not the car speed exceeds the appropriate value. If the car speed exceeds the appropriate value, the process proceeds to step S34.

In step S34, the car speed monitoring section 202 identifies the speed meter as a to-be-checked target. The car speed monitoring section 202 supplies information indicating that the speed meter has been identified as a to-be-checked target, to the face direction detecting section 102, line-of-sight direction detecting section 103, and check condition detecting section 104, and notification control section 105.

In step S35, the detection of direction of the face or line of sight is started as in the case of step S3 in FIG. 4, described above.

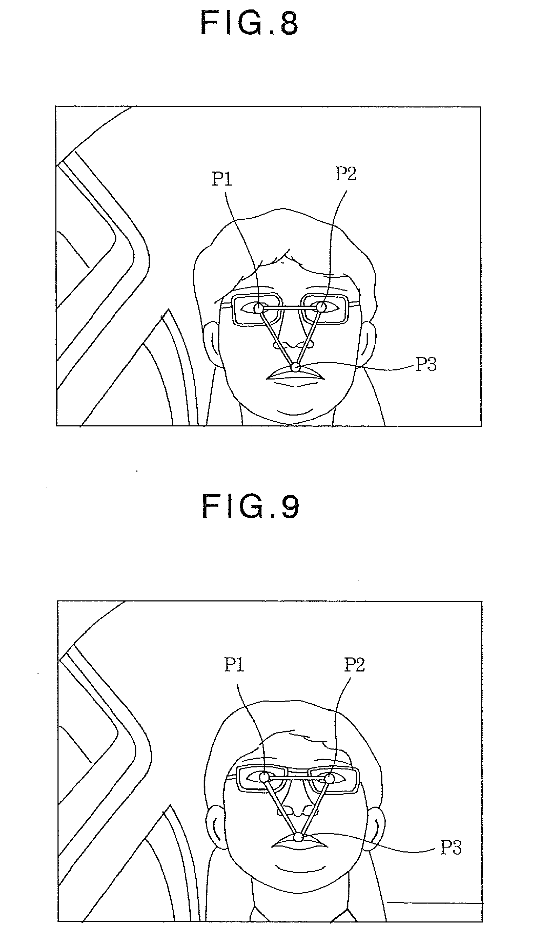

Description will be given of a method of detecting whether or not the driver's face is directed toward the speed meter. FIG. 8 shows an example of image data taken by the camera 11 installed in the vicinity of the speed meter while the driver is viewing the speed meter. FIG. 9 shows an example of image data taken by the camera 11 installed in the vicinity of the speed meter while the driver is driving the car without viewing the speed meter. The face direction detecting section 102 uses an image recognition technique to detect a center point P1 in the iris of the driver's right eye in the image data, a center point P2 in the iris of the driver's left eye, and a center point P3 in the driver's mouth. And, the face direction detecting section 102 detects the shape of a triangle of the points P1 to P3. For example, the face direction detecting section 102 pre-stores the shape of a triangle composed of points P1 to P3 observed when the driver is viewing the speed meter. The face direction detecting section 102 compares this shape with the shape of a triangle of the points P1 to P3 detected in the image data during a monitoring process. The face direction detecting section 102 thus detects whether the driver's face is directed toward the speed meter or another object.

In step S36, the check condition detecting section 104 determines whether or not the driver has checked the speed meter. Specifically, the check condition detecting section 104 detects whether or not the driver has viewed the speed meter for a predetermined time (for example, 0.5 seconds), on the basis of the direction of the user's face detected by the face direction detecting section 102 or the direction of the user's line of sight detected by the line-of-sight direction detecting section 103. If the check condition detecting section 104 has not detected that the driver has viewed the speed meter for at least the predetermined time, it determines that the driver has not checked the speed meter. The process proceeds to step S37.

In step S37, the check condition detecting section 104 determines whether or not a predetermined time has passed since the identification of the to-be-checked target which is a speed meter. If the check condition detecting section 104 determines the predetermined time (for example, 10 seconds) has not passed since an excess of the car speed over the appropriate value, the process returns to step S36. Steps S36 and S37 are then repeated until the check condition detecting section 104 determines in step S36 that the driver has checked the speed meter or the check condition detecting section 104 determines in step S37 that the predetermined time has passed since the identification of the to-be-checked target.

In step S37, if the check condition detecting section 104 determines that the predetermined time has passed since the identification of the to-be-checked target which is a speed meter, the process then proceeds to step S38.

In step S38, the notifying section 17 starts notifying the user of the excess of the speed. Specifically, the check condition detecting section 104 supplies the notification control section 105 with information indicating that the user has not checked the to-be-checked target. The notifying section 17 then starts, under the control of the notification control section 105, displaying or auditorily outputting a message, for example, "The appropriate speed is exceeded by **••** km" or activating an alarm indicating that the appropriate speed is exceed.

In step S39, the apparatus determines whether or not the driver has checked the speed meter, as in the case of step S36. If the apparatus determines that the driver has not checked the speed meter, the process proceeds to step S40.

In step S40, the car speed monitoring section 202 determines whether or not the car speed still exceeds the appropriate value. If the car speed monitoring section 202 determines that the car speed still exceeds the appropriate value, the process returns to step S39. Steps S39 and S40 are then repeated until the apparatus determines in step S39 that the driver has checked the speed meter and the car speed monitoring section 202 determines in step S40 that the car speedhas returned to within the range of the appropriate value.

In step S40, if the car speed monitoring section 202 determines that the car speed has returned to within the range of the appropriate value, the process proceeds to step S41.

In step S41, the notifying section 17 stops the notification of the excess of the speed. Specifically, the car speed monitoring section 202 supplies information indicating that the car speed has returned to within the range of the appropriate value, to the face direction detecting section 102, line-of-sight direction detecting section 103, check condition detecting section 104, and notification control section 105. The notifying section 17 stops the notification of the excess of the speed started in step S38, under the control of the notification control section 105. The process then proceeds to step S43.

In steps S36 and S39, if the check condition detecting section 104 detects that the driver has viewed the speed meter for at least a predetermined time, it determines that the driver has checked the speed meter. The process then proceeds to step S42.

In step S42, the notification control section 105 limits the notification of the excess of the speed. Specifically, the check condition detecting section 104 supplies information indicating that the driver has checked the speed meter, to the to-be-checked target identifying section 101, face direction detecting section 102, line-of-sight direction detecting section 103, and notification control section 105. The notification control section 105 limits the notification of excess of the speed.

The notification is limited by, for example, suspending or stopping the notification, delaying the start of the notification, or preventing the notification from being given until the car speed returns to within the range of the appropriate value. Alternatively, the level of the notification to the user may be limited by, for example, reducing the volume of the notification sound or the brightness or size of the notification display.

In step S43, the detection of direction of the face or line of sight is stopped as in the case of step S11 in FIG. 4, described above.

If the apparatus determines in step S33 that the car speed is within the range of the appropriate value, steps S34 to S43 are skipped and the process proceeds to step S44.

In step S44, the apparatus determines whether or not to continue the monitoring as in the case of step S12 in FIG. 4, described above. If the apparatus determines that the monitoring be continued, the process returns to step S33. Steps S33 to S44 are then repeated until the apparatus determines in step S44 that the monitoring be ended.

In step S44, if the apparatus determines that the monitoring be ended, then it ends the monitoring process.

The notification of excess of the speed is thus limited simply by performing the required operation of checking the speedmeter. This prevents the situation in which, for example, even though the driver has confirmed the excess over the appropriate speed and is now conscious of safety in driving, the same notification as that given before the check is continuously given. The driver is thus prevented from being bothered by such a notification.

Since checking the speed meter causes the notification of excess of the speed to be limited, the driver is ensured to check the speed meter if the appropriate speed is exceeded. For example, at an interchange (IC) on an expressway, if the car leaves the expressway for a tollgate, the driver may have lost the sense of speed and thus often markedly exceed the speed limit. In this case, the driver can recover the sense of speed by checking the speed meter in response to the start of notification of the excess of the speed.

I f the appropriate speed is exceeded, the driver is ensured to be notified of the excess of the speed unless he or she checks the speed meter. This improves safety and reduces the risk of an accident.

In step S37, the check condition detecting section 104 may determine whether or not the car has traveled a predetermined distance since the identification of the to-be-checked target instead of determining whether or not the predetermined time has passed since the identification of the to-be-checked target.

In step S42, if the car speed remains in excess of the appropriate value for a predetermined time after the limitation of notification of the excess of the speed, the limitation of the notification may be cancelled to recover the original notifying operation.

As described above, the present apparatus can detect whether or not the user has checked a target to be checked by the user, as follows. The apparatus identifies the to-be-checked target to be checked by the user and detects the direction of the user's face or line of sight. The apparatus then detects whether or not the user has checked the to-be-checked target, on the basis of the detected direction of the face or line of sight. The apparatus then controls a notification to the user so that if the apparatus does not detect that the user has checked the to-be-checked target, it notifies the user of a situation requiring the user to check the to-be-checked target and so that if the apparatus detects that the user has checked the to-be-checked target, it limits the notification of the situation requiring the user to check the to-be-checked target. Also, the present apparatus can urge the user appropriately to check a target to be checked by the user.

Besides the above apparatus monitoring the cars speed, the present invention is applicable to apparatuses that, for example, give a notification, warning, alarm, or the like to urge the user to check a target to be checked by the user.

The above series of processes can be executed not only by hardware but also by software. If the series of processes are executed by software, a program constituting the software and recorded in program recording media is installed in a computer incorporated into dedicated hardware or in a general-purpose personal computer that can execute various functions in accordance with various programs installed in it.

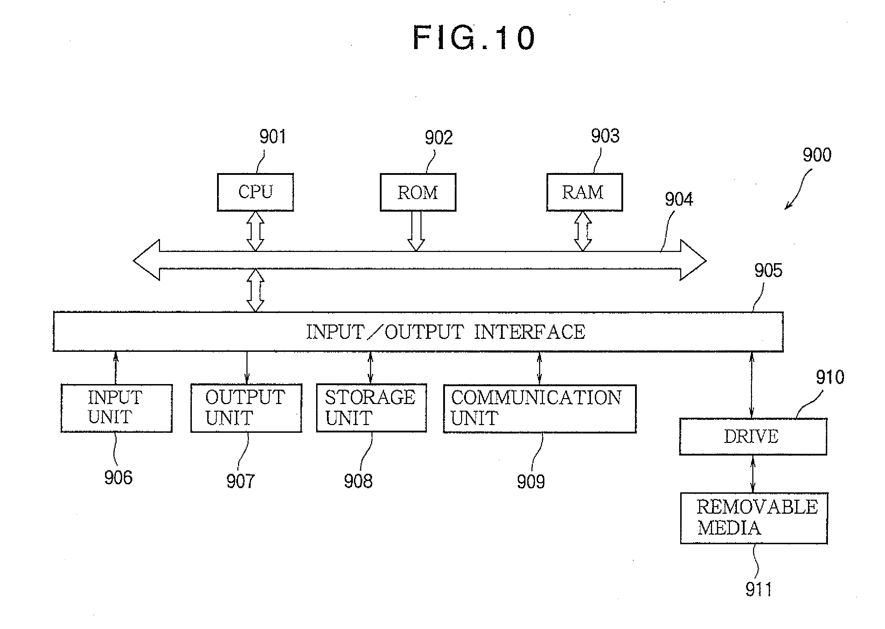

FIG. 10 is a block diagram showing an example of the configuration of a personal computer that executes the above series of processes in accordance with the programs. A CPU (Central Processing Unit) 901 executes various processes in accordance with programs stored in a ROM (Read Only Memory) 902 or a recording section 908. A RAM (Random Access Memory) 903 appropriately stores programs executed by the CPU 901, data, or the like. The CPU 901, the ROM 902, and the RAM 903 are connected together by a bus 904.

An I/O interface 905 is also connected to the CPU 901 via the bus 904. An input section 906 and an output section 907 are connected to the I/O interface 905; the input section 906 consists of a keyboard, a mouse, a microphone, and the like, and the output section 907 consists of a display, a speaker, and the like. The CPU 901 executes various processes in accordance with instructions input via the input section 906. The CPU 901 outputs process results to the output section 907.

A recording section 908 connected to the I/O interface 905 consists of, for example, a hard disk and stores programs executed by the CPU 901 and various data. A communication section 909 communicates an external apparatus via a network such as the Internet or a local area network.

Programs may be acquired via the communication section 909 and stored in the recording section 908.

Upon connecting to removable media 911 such as a magnetic disk, an optical disk, a magneto optic disk, or a semiconductor memory, a drive 910 connected to the I/O interface 905 drives it to acquire a program or data recorded in it. The program or data acquired is transferred to and stored in the recording section 908 as required.

The program recording media, installed in the computer and storing programs executed by the computer, is composed of the removable media 911 that is package media consisting of a magnetic disk (or a flexible disk), an optical disk (or a CD-ROM (Compact Disc-Read Only Memory) or a DVD (Digital Versatile Disc)), a magnet optic disk, or a semiconductor memory, or the ROM 902 in which programs are temporarily or permanently stored, or a hard disk constituting the recording section 908 as shown in FIG. 10. Programs are stored in the program recording media via the communication section 909 utilizing wired or wireless communication media such as a local area network, the Internet, or digital satellite broadcasting; the communication section 909 is an interface such as a router or a modem.

In the present specification, the steps describing the programs stored in the program recording media are executed in the described order in a time series manner. However, these steps need not necessarily executed in a time series manner but may be executed in parallel or individually.

The embodiment of the present invention is not limited to the one described above. However, various changes may be made to the embodiment without departing from the spirit of the present invention.

## Claims

1. A notification control apparatus comprising:
identifying means for identifying a to-be-checked target to be checked by a user;
direction detecting means for detecting a direction of the user's face or line of sight;
a check detecting means for detecting whether or not the user has checked the to-be-checked target, on the basis of the detected direction of the face or line of sight; and
notification control means for controlling a notification to the user so that the user is notified of a situation requiring the user to check the to-be-checked target if the check detecting means does not detect that the user has checked the to-be-checked target and so that the notification of a situation requiring the user to conform the to-be-checked target is limited if the check detecting means detects that the user has checked the to-be-checked target.

2. The notification control apparatus according to claim 1, wherein the check detecting means detects whether or not the user has checked the to-be-checked target, on the basis of a time for which or the number of times that the user looks toward the to-be-checked target.

3. The notification control apparatus according to claim 1, wherein the notification control means limits the notification to the user by suspending, stopping, or delaying the notification, reducing the frequency of the notification, or changing a method or content of the notification.

4. The notification control apparatus according to claim 1, wherein if the speed of a car driven by the user exceeds an appropriate value, the identifying means identifies the to-be-checked target that is a speed meter of the car,
the check detecting means detects whether or not the user has checked the speed meter, and
the notification control means controls the notification to the user so that the user is notified that the speed of the car exceeds the appropriate value if the check detecting means does not detect that the user has checked the speed meter and so that the notification of an excess of the car speed over the appropriate value is limited if the check detecting means detects that the user has checked the speed meter.

5. A method of controlling notification comprising the steps of:
identifying a to-be-checked target to be checked by a user;
detecting a direction of the user's face or line of sight;
detecting whether or not the user has checked the to-be-checked target, on the basis of the detected direction of the face or line of sight; and
controlling a notification to the user so that the user is notified of a situation requiring the user to check the to-be-checked target if the check detection does not detect that the user has checked the to-be-checked target and so that the notification of a situation requiring the user to conform the to-be-checked target is limited if the check detection detects that the user has checked the to-be-checked target.

6. A program for allowing computer to execute a process comprising:
an identifying step of identifying a to-be-checked target to be checked by a user;
a direction detecting step of detecting a direction of the user's face or line of sight;
a check detecting step of detecting whether or not the user has checked the to-be-checked target, on the basis of the detected direction of the face or line of sight; and
a notification control step of controlling a notification to the user so that the user is notified of a situation requiring the user to check the to-be-checked target if the check detecting step does not detect that the user has checked the to-be-checked target and so that the notification of a situation requiring the user to conform the to-be-checked target is limited if the check detecting step detects that the user has checked the to-be-checked target.

7. Recording media in which the program according to claim 6 is recorded.
